# EUROPÄISCHE PATENTSCHRIFT

(11) **EP 1 849 229 B1**
(45) Veröffentlichungstag und Bekanntmachung des Hinweises auf die Patenterteilung: **21.08.2013**
(21) Anmeldenummer: 06708087.9
(22) Anmeldetag: 08.02.2006
(51) Int. Cl.: H02K 11/00

(54) **ELEKTRISCHE MASCHINE**
ELECTRICAL MACHINE
MACHINE ELECTRIQUE

(30) Priorität: 17.02.2005 DE 102005007371
(43) Veröffentlichungstag der Anmeldung: 31.10.2007
(73) Patentinhaber: Siemens Aktiengesellschaft, 80333 München (DE)
(72) Erfinder: CHRISTIAN, Karsten, 13355 Berlin (DE); EL FALAKI, Mahmoud-Adel, 14624 Seeburg (DE); HAUPTMANN, Roland, 13597 Berlin (DE); HÜBNER, Lutz, 14165 Berlin (DE); ZWARG, Günter, 14052 Berlin (DE)
(86) Internationale Anmeldenummer: PCT/EP2006/050740
(87) Internationale Veröffentlichungsnummer: WO 2006/087278

(56) Entgegenhaltungen:
- WO-A-00/67355
- WO-A-01/17084
- US-A- 3 824 857
- US-A- 5 257 863
- US-A- 6 093 986

## Beschreibung

Die Erfindung betrifft eine elektrische Maschine nach dem Oberbegriff des Anspruchs 1.

Elektrische Maschinen werden in sehr vielen technischen Bereichen verwendet. Je nach Einsatz von elektrischen Maschinen spricht man von Motorbetrieb (Wandlung von elektrischer Energie in mechanische) oder von Generatorbetrieb (Wandlung von mechanischer Energie in elektrische). D.h., der Begriff "elektrische Maschine" umfasst sowohl Motoren als auch Generatoren. Bei elektrischen Maschinen ist weiterhin zu unterscheiden zwischen Gleichstrommaschinen, Wechselstrommaschinen und Drehstrommaschinen. Drehstrommaschinen können unterteilt werden in Drehstrom-Synchronmaschinen und Drehstrom-Asynchronmaschinen.

Alle diese elektrischen Maschinen enthalten u. a. einen ruhenden Stator und einen drehbar gelagerten Läufer. Der Läufer ist je nach Bauform mit einem Wicklungssystem bestückt. Dieses Wicklungssystem kann aus einer oder mehreren Drahtwick-lungen oder Stabwicklungen bestehen. Aus Drahtwicklungen oder auch Stabwicklungen können auch Käfigwicklungen konstruiert werden.

Es ist aus WO0117084 und W00067355 bekannt, Elektronikkomponenten, wie z.B. Sensoren oder Umrichter am Läufer anzubringen. Allerdings bleibt in diesen Schriften offen, wie diese Elektronikkomponenten mit Spannung versorgt werden können.

In US6093986 wird vorgeschlagen, einen auf dem Läufer angebrachten Sensor mittels der in einem gesondert angebrachten Wicklungssystem induzierten Spannung mit Energie zu versorgen.

Nachteilig ist dabei aber, dass ein gesondertes Wicklungssystem auf dem Läufer angebracht werden muss, welches zusätzliche Kosten verursacht und durch welches der Läufer und das Gehäuse der elektrischen Maschine größer dimensioniert werden müssen.

Der Erfindung liegt deshalb die Aufgabe zugrunde, ein Mess-/ Steuersystem des Läufers mit Spannung zu versorgen, wobei der zusätzliche Konstruktionsaufwand minimiert werden soll. Außerdem soll eine Lösung angegeben werden, so dass das Mess-/ Steuersystem auch im Stillstand der elektrischen Maschine in Betrieb bleiben kann. Das Mess-/Steuersystem kann z.B. Temperatursensoren oder eine Logikschaltung beinhalten, welche eine Notabschaltung der elektrischen Maschine steuert, wenn während des Betriebs eine maximal zulässige Betriebstemperatur überschritten wird.

Diese Aufgabe wird erfindungsgemäß dadurch gelöst, dass Mittel vorhanden sind, die einen Spannungsabgriff an dem Wicklungssystem des Läufers zur Versorgung des Mess-/Steuersystems gestatten.

Durch den Spannungsabgriff am Wicklungssystem wird in vorteilhafter Weise dafür gesorgt, dass keine gesonderte Spannungsquelle am Läufer vorgesehen werden muss. Dies führt zu einem geringeren Konstruktionsaufwand, zu einer Verbesserung der Robustheit und zu einer Minimierung der Kosten, bei gleichzeitig erhöhter Betriebssicherheit.

Weiterhin kann die angegebene Erfindung in vorteilhafter Weise auf eine Vielzahl von elektrischen Maschinen angewendet werden. Eine Möglichkeit besteht darin, dass die abgegriffene Spannung durch Induktion in dem Wicklungssystem hervorgerufen wird. Dies ist z.B. der Fall bei einer Drehstrom-Asynchronmaschine mit einem Käfigläufer.

Eine weitere Möglichkeit besteht darin, dass das Wicklungssystem Erregerspulen beinhaltet, wie z.B. bei Drehstrom-Synchronmaschinen. Die Erregerspulen werden von außen mit Strom versorgt. Darüber hinaus kann die abgegriffene Spannung auch durch ein mitdrehendes Generatorsystem erzeugt werden oder durch eine Schleifringanordnung auf den Läufer geführt werden.

In allen Fällen sind am Wicklungssystem spezielle Kontakte vorgesehen, um einen störungsfreien Spannungsabgriff auch bei hohen Drehzahlen des Läufers zu gewährleisten.

Weitere Ausführungsbeispiele ergeben sich, wenn die im Generatorsystem induzierte Spannung gleichgerichtet wird oder wenn von der am Wicklungssystem abgegriffenen Spannung nur der Wechselanteil zur Versorgung des Mess-/Steuersystems herangezogen wird. Dies kann z.B. durch einen Kondensator oder Hochpass erreicht werden, welche nach dem Spannungsabgriff geschaltet sind. In diesem Fall kann ein Gleichrichter vorgesehen werden, der den Wechselanteil der abgegriffenen Spannung gleichrichtet.

Ein weiterer Vorteil der Erfindung ergibt sich, wenn ein Spannungsmodul vorgesehen wird, welches die am Wicklungssystem abgegriffene Spannung, bzw. den gleichgerichteten Wechselanteil der an dem Wicklungssystem abgegriffenen Spannung in ein niedrigeres Spannungsintervall transformiert. Dann nämlich können kostengünstige Elektronik-Standardkomponenten für den Niederspannungsbereich zum Aufbau des Mess-/Steuersystems verwendet werden. Diese Elektronik-Standard-Komponenten können z.B. Logikbausteine sein, welche bei einer festen Versorgungsspannung von z.B. 5V arbeiten. Um diese Elektronik-Standardkomponenten im optimalen Betriebsbereich wie z.B. 5V nutzen zu können, kann vorteilhafter Weise ein zusätzlicher Spannungsregler vorgesehen werden, der die Versorgungsspannung für das Mess-/Steuersystem auf einen festen Wert regelt.

Ein weiterer Vorteil der Erfindung ergibt sich, wenn ein Akkumulator vorgesehen wird, der zumindest einen Teil der Energie speichert, welche durch den Spannungsabgriff zur Versorgung des Mess-/Steuersystems bereitgestellt wird. Dann nämlich kann das Mess-/Steuersystem weiter in Betrieb bleiben, auch wenn z.B. der Läufer sich nicht dreht, bzw. die am Wicklungssystem abgegriffenen Spannung unter einen Schwellwert gefallen ist. Um den Akkumulator optimal zu laden kann weiterhin ein IC-Ladeprozessor vorgesehen werden. Um ein versehentliches Entladen des Akkumulators über das Wicklungssystem zu verhindern, ist erfindungsgemäß eine Diode vorgesehen.

Die Erfindung sowie weitere vorteilhafte Ausgestaltungen der Erfindung gemäß den Merkmälen der Unteransprüche werden im folgenden anhand von schematisch dargestellten Ausführungsbeispielen in der Zeichnung näher erläutert, ohne dass dadurch eine Beschränkung der Erfindung auf dieses Ausführungsbeispiel erfolgt; es zeigen:
- FIG 1: eine elektrische Maschine;
- FIG 2: das Wicklungssystem des Läufers und das Mess-/Steuersystem;
- FIG 3: einen Aufbau zur Speisung des Wicklungssystems mit Hilfe eines Generatorsystems;
- FIG 4: eine Schaltung zur Spannungsversorgung des Mess-/ Steuersystems;
- FIG 5: eine weitere Schaltung zur Spannungsversorgung des Mess-/Steuersystems;
- FIG 6: eine Schaltung zur Spannungsversorgung des Mess-/ Steuersystems mit einem Akkumulator.

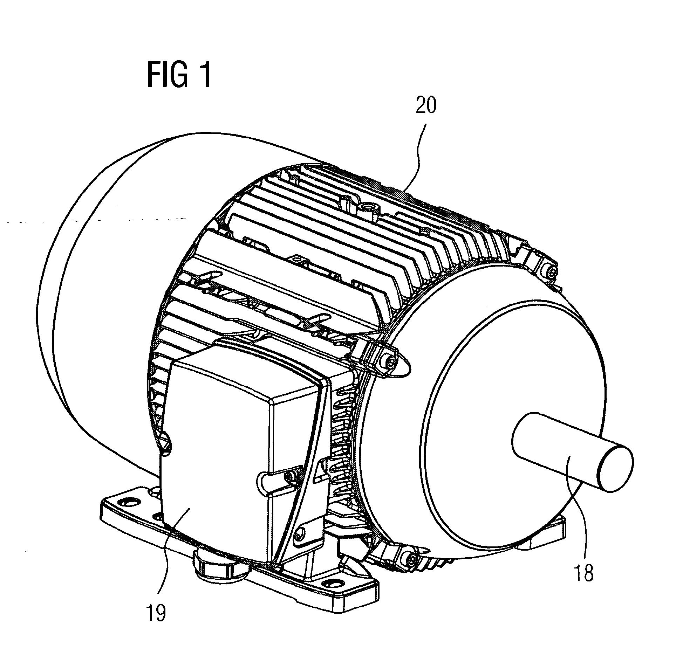

FIG 1 zeigt eine elektrische Maschine, die einen ruhenden Stator und einen drehbar gelagerten Läufer enthält. In FIG 1 ist von der elektrischen Maschine das Gehäuse 20, die Welle 18, sowie der Anschluss-Klemmkasten 19 zu sehen. Der Läufer der elektrischen Maschine ist je nach Bauform mit einem Wicklungssystem bestückt. Dieses Wicklungssystem kann aus einer oder mehreren Drahtwicklungen oder Stabwicklungen bestehen. Aus Drahtwicklungen oder Stabwicklungen können auch Käfigwicklungen konstruiert werden.

Je nach Einsatz von elektrischen Maschinen spricht man von Motorbetrieb (Wandlung von elektrischer Energie in mechanische) oder von Generatorbetrieb (Wandlung von mechanischer Energie in elektrische). D.h., der Begriff "elektrische Maschine" umfasst sowohl Motoren als auch Generatoren. Bei elektrischen Maschinen ist weiterhin zu unterscheiden zwischen Gleichstrommaschinen, Wechselstrommaschinen und Drehstrommaschinen. Drehstrommaschinen können unterteilt werden in Drehstrom-Synchronmaschinen und Drehstrom-Asynchronmaschinen.

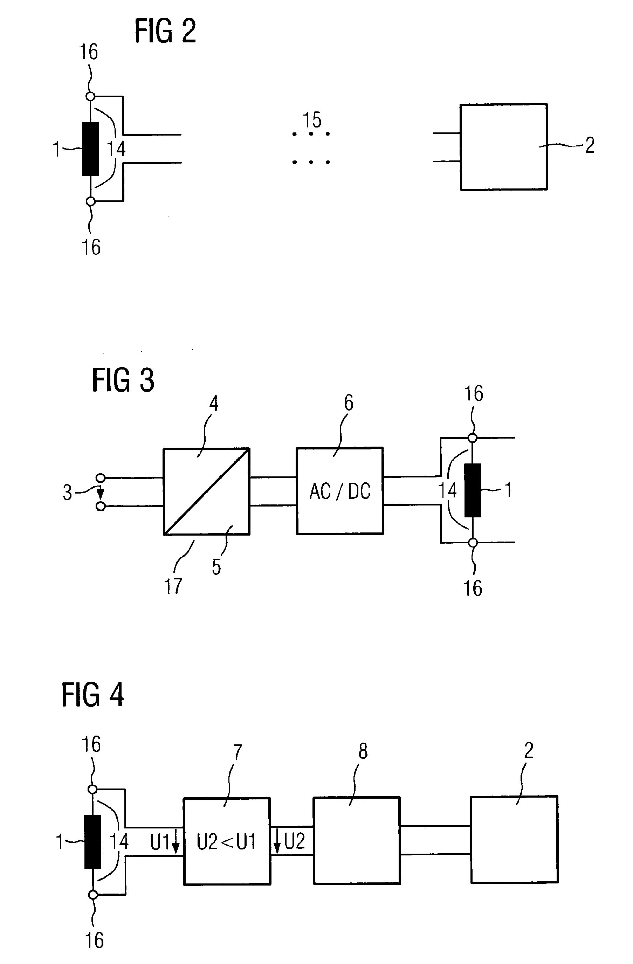

FIG 2 zeigt ein beispielhaftes Wicklungssystem 1 des Läufers, welches in diesem Beispiel zwei Kontakte 16 hat, jedoch auch mehr als zwei Kontakte aufweisen kann. Weiterhin ist in FIG 2 ein Mess-/Steuersystem 2 eingezeichnet, welches über einen Spannungsabgriff 14 an dem Wicklungssystem 1 und eine geeignete Schaltung 15 mit Spannung versorgt wird. Entsprechend der Anzahl der Kontakte 16 am Wicklungssystem 1 können auch mehrere Spannungsabgriffe 14 zur Spannungsversorgung des Mess-/Steuersystems 2 eingesetzt werden. Im Wicklungssystem 1 können eine oder mehrere Draht- oder Stabwicklungen eingebaut sein. Aus den Draht- oder Stabwicklungen können auch Käfigwicklungen geformt werden, so dass sich Käfigläufer ergeben. Eine weitere Möglichkeit besteht darin, dass das Wicklungssystem 1 Erregerspulen beinhaltet, wie z.B. bei Drehstrom-Synchronmaschinen. Die Erregerspulen werden dann mit Gleichstrom gespeist.

In allen Fällen sind am Wicklungssystem 1 spezielle Kontakte 16 vorgesehen, um Störungen am Spannungsabgriff 14 auch bei hohen Drehzahlen des Läufers auszuschließen. Diese Kontakte können z.B. aus Lötpunkten bzw. aus verschraubbaren oder steckbaren Verbindungen bestehen.

FIG 3 zeigt einen Aufbau zur Speisung des Wicklungssystems 1 mit Hilfe eines Generatorsystems 17 bestehend aus einer Spannungsquelle 3, einem Statorelement 4 und einem Läuferelement 5. Zur Gleichrichtung der im Läuferelement 5 des Generatorsystems 17 induzierten Spannung wird ein Gleichrichter 6 benutzt. Das Läuferelement 5 des Generatorsystems 17 befindet sich auf der gleichen Welle wie das Wicklungssystem 1. Mit der Spannungsquelle 3 kann die im Läuferelement 5 induzierte Spannung des Generatorsystems 17 beeinflusst werden. Die gleichgerichtete Spannung treibt dann einen Strom durch das Wicklungssystem 1.

In FIG 4 ist ein Ausführungsbeispiel für die Schaltung 15 gezeigt. Die mit Hilfe des Spannungsabgriffs 14 an den Kontakten 16 des Wicklungssystems 1 abgegriffene Spannung wird von einem Spannungsmodul 7 in eine niedrigere Spannung transformiert, da die abgegriffene Spannung u. U. sehr groß sein kann. Die transformierte Spannung wird dann von einem Spannungsregler 8 auf eine konstante Ausgangsspannung zur Versorgung des Mess-/Steuersystems 2 geregelt. Das Spannungsmodul 7 kann zusätzlich dazu dienen, die Potentiale des Wicklungssystems 1 und des Spannungsreglers 8 zu trennen.

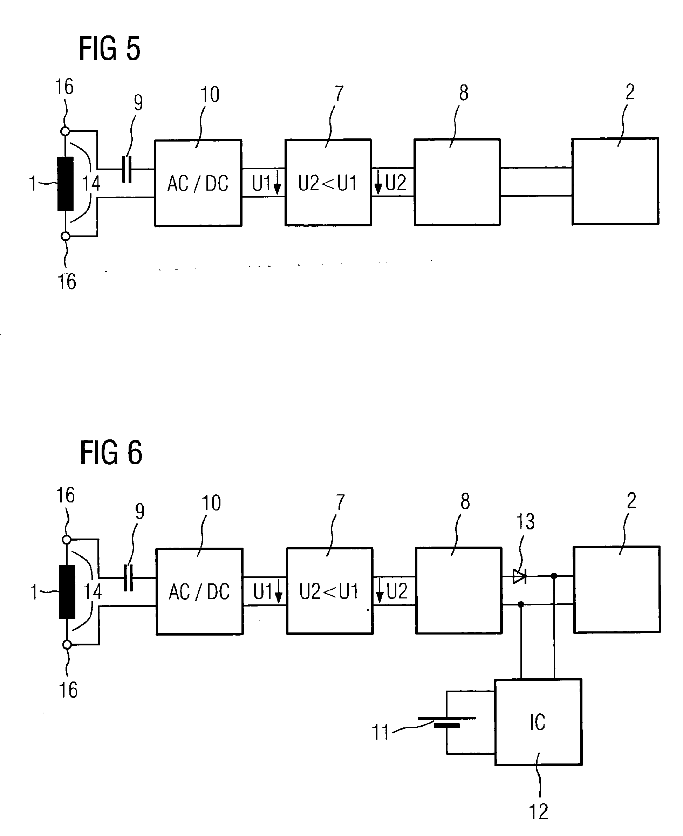

FIG 5 zeigt eine weitere Schaltung 15 zur Spannungsversorgung des Mess-/Steuersystems 2. Hier wird im Gegensatz zu dem Ausführungsbeispiel in FIG 4 nur der Wechselanteil der durch den Spannungsabgriff 14 abgegriffenen Spannung zur Versorgung des Mess-/Steuersystems 2 genutzt. Der Wechselanteil wird mit Hilfe eines Kondensators 9 oder eines Hochpasses abgezweigt. Die abgezweigte Wechselspannung wird dann von einem Gleichrichter 10 gleichgerichtet. Nachfolgend wird die sich ergebende Spannung wieder vom Spannungsmodul 7 transformiert und vom Spannungsregler 8 auf eine feste Spannung geregelt, welche dann zur Spannungsversorgung des Mess-/Steuersystems 2 dient.

FIG 6 zeigt eine Schaltung zur Spannungsversorgung des Mess-/ Steuersystems 2 mit einem Akkumulator 11. Durch den Akkumulator 11 kann das Mess-/Steuersystem 2 weiter in Betrieb bleiben, auch wenn z.B. der Läufer sich nicht dreht, bzw. die am Wicklungssystem 1 abgegriffenen Spannung unter einen Schwellwert gefallen ist. Um den Akkumulator 11 optimal zu laden kann weiterhin ein IC-Ladeprozessor 12 vorgesehen werden. Um ein versehentliches Entladen des Akkumulators 11 z.B. über das Wicklungssystem 1 zu verhindern, kann eine Diode 13 vorgesehen werden.

## Patentansprüche

1. Elektrische Maschine mit einem Stator und einem als Käfigläufer ausgebildeten Läufer,
wobei der Läufer ein Wicklungssystem (1) aufweist und mit einem Mess-/Steuersystem (2) versehen ist,
**dadurch gekennzeichnet, dass** Mittel vorhanden sind, die einen Spannungsabgriff (14) an dem Wicklungssystem (1) des Läufers aufweisen, welche zur Versorgung des Mess-/Steuersystems (2) dienen.

2. Elektrische Maschine nach Anspruch 1,
**dadurch gekennzeichnet, dass** das Wicklungssystem (1) Mittel zum Spannungsabgriff aufweist.

3. Elektrische Maschine nach Anspruch 1 oder 2,
**dadurch gekennzeichnet, dass** ein Mittel vorhanden ist, das von der an dem Wicklungssystem (1) abgegriffenen Spannung nur den Wechselanteil zur Versorgung des Mess-/Steuersystems (2) passieren lässt.

4. Elektrische Maschine nach Anspruch 3,
**dadurch gekennzeichnet, dass** das Mittel als Kondensator (9) oder Hochpass ausgeführt wird.

5. Elektrische Maschine nach Anspruch 3 oder 4,
**dadurch gekennzeichnet, dass** ein Gleichrichter (10) vorgesehen ist, um den Wechselanteil der an dem Wicklungssystem (1) abgegriffenen Spannung gleichzurichten.

6. Elektrische Maschine nach einem der Ansprüche 1 bis 5,
**dadurch gekennzeichnet, dass** ein Spannungsmodul (7) vorgesehen ist, um die an dem Wicklungssystem (1) abgegriffene Spannung bzw. den gleichgerichteten Wechselanteil der an dem Wicklungssystem (1) abgegriffenen Spannung in eine niedrigere Spannung zu transformieren.

7. Elektrische Maschine nach Anspruch 6,
**dadurch gekennzeichnet, dass** dem Spannungsmodul (7) ein Spannungsregler (8) nachgeschaltet ist.

8. Elektrische Maschine nach Anspruch 7,
**dadurch gekennzeichnet, dass** das Spannungsmodul (7) ein Mittel aufweist, welches die Potentiale des Wicklungssystems (1) und des Spannungsreglers (8) trennt.

9. Elektrische Maschine nach einem der Ansprüche 1 bis 8,
**dadurch gekennzeichnet, dass** ein Akkumulator (11) vorgesehen ist, um zumindest einen Teil der Energie zu speichern, welche durch den Spannungsabgriff (14) an dem Wicklungssystem (1) zur Versorgung des Mess-/Steuersystems (2) bereitgestellt wird.

10. Elektrische Maschine nach Anspruch 9,
**dadurch gekennzeichnet, dass** dem Akkumulator (11) ein IC-Ladeprozessor (12) zugeordnet ist.

11. Elektrische Maschine nach Anspruch 9 oder 10,
**dadurch gekennzeichnet, dass** eine Diode (13) vorgesehen ist, die verhindert, dass der Akkumulator (11) über das Wicklungssystem (1) entladen wird.

## Revendications

1. Machine électrique ayant un stator et un rotor constitué sous la forme d'un rotor à cage d'écureuil,
dans laquelle le rotor a un système ( 1 ) d'enroulement et est pourvu d'un système ( 2 ) de mesure/commande,
**caractérisée en ce qu'**il y a des moyens qui ont un prélèvement ( 14 ) de tension sur le système ( 1 ) d'enroulement du rotor et qui servent à alimenter le système ( 2 ) de mesure/commande.

2. Machine électrique suivant la revendication 1,
**caractérisée en ce que** le système ( 1 ) d'enroulement a des moyens de prélèvement d'une tension.

3. Machine électrique suivant l'une des revendications 1 ou 2,
**caractérisée en ce qu'**il y a un moyen qui ne laisse passer, pour l'alimentation du système ( 2 ) de mesure/commande de la tension prélevée sur le système ( 1 ) d'enroulement, que la partie alternative.

4. Machine électrique suivant la revendication 3,
**caractérisée en ce que** le moyen est réalisé en condensateur ( 9 ) ou en passe haut.

5. Machine électrique suivant l'une des revendications 3 ou 4,
**caractérisée en ce qu'**il est prévu un redresseur ( 10 ) pour redresser la partie alternative de la tension prélevée sur le système ( 1 ) d'enroulement.

6. Machine électrique suivant l'une des revendication 1 à 5,
**caractérisée en ce qu'**il est prévu un module ( 7 ) de tension pour transformer, en une tension plus basse, la partie alternative redressée de la tension prélevée sur le système ( 1 ) d'enroulement ;

7. Machine électrique suivant la revendication 6,
**caractérisée en ce qu'**un régleur ( 8 ) de tension est monté en aval du module ( 7 ) de tension.

8. Machine électrique suivant la revendication 7,
**caractérisée en ce que** le module ( 7 ) de tension a un moyen qui sépare les potentiels du système ( 1 ) d'enroulement et du régleur ( 8 ) de tension.

9. Machine électrique suivant l'une des revendication 1 à 8,
**caractérisée en ce qu'**il est prévu un accumulateur ( 11 ) pour accumuler au moins une partie de l'énergie qui, pour l'alimentation du système ( 2 ) de mesure/commande, est procurée par la prise ( 14 ) de tension sur le système ( 1 ) d'enroulement.

10. Machine électrique suivant la revendication 9,
**caractérisée en ce qu'**un processeur ( 12 ) de charge IC est associé à l'accumulateur ( 11 ).

11. Machine électrique suivant l'une des revendications 9 ou 10,
**caractérisée en ce qu'**il est prévu une diode ( 13 ) qui empêche que l'accumulateur ( 11 ) se décharge par le système ( 1 ) d'enroulement.

## Claims

1. Electrical machine having a stator and a rotor which is in the form of a squirrel-cage rotor,
with the rotor having a winding system (1) and being provided with a measurememnt/control system (2),
**characterized in that** means are provided which have a voltage tap (14) on the winding system (1) of the rotor and are used to sypply the measurement/control system (2).

2. Electrical machine according to Claim 1,
**characterized in that** the winding system (1) has means for voltage tapping.

3. Electrical machine according to Claim 1 or 2,
**characterized in that** a means is provided which allows only the alternating component of the voltage which is tapped off from the winding system (1) to pass through to sypply the measurement/control system (2).

4. Electrical machine according to Claim 3,
**characterized in that** the means is in the form of a capacitor (9) or a high-pass filter.

5. Electrical machine according to Claim 3 or 4,
**characterized in that** a rectifier (10) is provided in order to rectify the alternating component of the voltage which is tapped off from the winding system (1).

6. Electrical machine according to one of Claims 1 to 5,
**characterized in that** a voltage module (7) is provided in order to transform the voltage which has been tapped off from the winding system (1), to be precise the rectified alternating component of the voltage which has been tapped off from the winding system (1), to a lower voltage.

7. Electrical machine according to Claim 6,
**characterized in that** the voltage module (7) is followed by a voltage regulator (8).

8. Electrical machine according to Claim 7,
**characterized in that** the voltage module (7) has a means which separates the potentials of the winding system (1) and of the voltage regulator (8).

9. Electrical machine according to one of Claims 1 to 8,
**characterized in that** a rechargeable battery (11) is provided in order to store at least a portion of the energy which is produced by the voltage tap (14) on the winding system (1) in order to sypply the measurement/control system (2).

10. Electrical machine according to Claim 9,
**characterized in that** the rechargeable battery (11) has an associated IC charging processor (12).

11. Electrical machine according to Claim 9 to 10,
**characterized in that** a diode (13) is provided and prevents the rechargeable battery (11) from being discharged via the winding system (1).
